# EUROPEAN PATENT APPLICATION

(11) **EP 4 837 661 A1**
(43) Date of publication of application: **11.11.2026**
(21) Application number: 24934758.4
(22) Date of filing: 29.08.2024
(51) Int. Cl.: B05C 1/08, B05C 9/04, H01M 4/04, H01M 4/139, H01M 10/058, H01M 10/0525, H01M 10/052, H01M 10/054

(54) **COATING DEVICE, COATING METHOD, AND BATTERY PRODUCTION LINE**

(30) Priority: 12.04.2024 CN 202410439188
(71) Applicant: Contemporary Amperex Technology Co., Limited, Ningde, Fujian 352100 (CN)
(72) Inventor: YANG, Pengjun, Ningde, Fujian 352100 (CN); TANG, Zhenguang, Ningde, Fujian 352100 (CN); SHANG, Hongwu, Ningde, Fujian 352100 (CN)
(74) Representative: Aera A/S
(86) International application number: PCT/CN2024/115561
(87) International publication number: WO 2025/213692

(57) **Abstract**

A coating device, a coating method, and a battery production line, relating to the technical field of batteries. The coating device is used for coating a base material (20) with functional layers (30, 40), and in the thickness direction of the base material (20), the base material (20) comprises a first surface and a second surface which are opposite to each other. The coating device comprises a first coating roller (11), a second coating roller (12), and a first driving member (13); the first coating roller (11) is used for coating the first surface with a first functional layer (30); along the web travel direction of the base material (20), the second coating roller (12) is arranged at the downstream or upstream of the first coating roller (11) and is used for coating the second surface with a second functional layer (40); and the first driving member (13) is connected to the first coating roller (11) and is used for driving the first coating roller (11) to reciprocate in the axial direction.

## Description

### CROSS-REFERENCE TO RELATED APPLICATIONS

The present application claims priority to Chinese Patent Application No. 202410439188.3, filed on April 12, 2024 and entitled "COATING DEVICE, COATING METHOD, AND BATTERY PRODUCTION LINE", which is incorporated herein by reference in its entirety.

### TECHNICAL FIELD

The present application relates to the technical field of batteries, and in particular, to a coating device, a coating method, and a battery production line.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

In the process of manufacturing batteries, the reliability of a battery is an issue that cannot be ignored. Therefore, it is an urgent technical problem to be solved in the field of battery technology how to improve the quality of electrode assemblies, as well as the overall quality and service performance of batteries.

### SUMMARY

To overcome the above technical problem, an objective of the present application is to provide a coating device, a coating method, and a battery production line, which can effectively solve the technical problem that the coil is obviously bulged after the base material is coated and wound, and when used in the production of the battery, the quality of the electrode assembly of the battery can be effectively improved, thereby improving the quality and performance of the battery.

In a first aspect, the present disclosure provides a coating device, configured to coat a base material with functional layers, where in the thickness direction of the base material, the base material includes a first surface and a second surface which are opposite to each other. The coating device includes a first coating roller, a second coating roller and a first driving member, and the first coating roller is configured to coat the first surface with the first functional layer; in a web travel direction of the base material, the second coating roller is arranged at the downstream or upstream of the first coating roller and configured to coat the second surface with a second functional layer; and the first driving member is connected to the first coating roller and configured to drive the first coating roller to reciprocate in an axial direction.

In the technical solution of the embodiment of the present application, in a web travel direction of the base material, the second coating roller is arranged at the downstream or upstream of the first coating roller, that is, the positions of the first coating roller and the second coating roller can be set according to requirements, and in some implementations, the base material can pass through the first coating roller and the second coating roller in sequence during web traveling, and the first functional layer on the first surface is coated and the second functional layer on the second surface is coated in sequence. In some other implementations, the base material can pass through the second coating roller and the first coating roller in sequence during web traveling, and the second functional layer on the second surface is coated and the first functional layer on the first surface is coated in sequence.

On the one hand, the first coating roller and the second coating roller are each provided with a coating structure capable of bonding a slurry, and when the first coating roller and the second coating roller rotate around axial directions thereof and contact the surface of the base material, the slurry bonded in the coating structures thereof can be coated onto the surface of the base material. The first functional layer is coated on the first surface of the base material by the first coating roller, the second functional layer is coated on the second surface of the base material by the second coating roller, and in the width direction of the base material, the coating ranges of the first coating roller and the second coating roller are both smaller than the width of the base material, that is, the first coating roller and the second coating roller are configured to coat the front surface and the back surface of a part of the base material with materials having certain functions, thereby meeting the functional requirements required by the base material.

On the other hand, due to the characteristics of the coating process, the thickness of the edge of the coated functional layer will be slightly greater than the thickness of the middle of the functional layer, and the functional layer will form a thick edge. If the first coating roller and the second coating roller rotate only in the axial direction, and the coating structure of the first coating roller and the coating structure of the second coating roller are always directly opposite to each other, the thick edge of the first functional layer and the thick edge of the second functional layer will be directly superposed in the thickness direction of the base material, and then after the base material is wound, the superposed portions of the thick edges of the plurality of turns of the base material will be superposed again in the thickness direction on the corresponding radial cross section of the coil, so that the coil after being wound is obviously bulged, which not only affects the subsequent production process, but also affects the overall flatness of the base material, and the base material is easily deformed in the width direction, has a radian, etc., and when the base material is a base material of an electrode sheet of a battery, the quality and performance of the finished battery product will be affected.

Therefore, in order to solve the above problem found, in this solution, by disposing the first driving member that drives the first coating roller to reciprocate in the axial direction, the first coating roller can also reciprocate in the axial direction while rotating around the axial direction thereof, so that the edge of the coating structure of the first coating roller and the edge of the coating structure of the second coating roller can be staggered. After the coating is completed, in the thickness direction of the base material, since the edge of the first functional layer and the edge of the second functional layer are not completely overlapped in projection, the thickness superposition of the thick edge of the first functional layer and the thick edge of the second functional layer formed on the base material can be effectively solved. In addition, in the width direction of the base material, since the relative position between the thick edge of the first functional layer and the thick edge of the second functional layer changes, the axial reciprocating movement of the first coating roller may be periodic or aperiodic, but as the base material is wound, the positions of the thick edges of the first functional layer on the plurality of turns of the base material may be at least partially staggered, and will not be all overlapped on the same radial section, thereby effectively solving the problem of obvious bulging after the coating and winding of the base material are completed.

It should be noted that, in a state where the second coating roller rotates only about the axis, although the position of the thick edge of the second functional layer formed on the base material is always unchanged in the width direction of the base material, the thick edge of the second functional layer still overlaps on the same radial section after the base material is wound, since the first coating roller reciprocates in the axial direction, for the thick edge of the second functional layer, in the thickness direction of the base material, for the thick edge of the second functional layer, some parts of the first surface corresponding to some parts do not have the first functional layer, some parts overlap with the thick edge of the first functional layer, and some parts overlap with the non-thick edge part of the first functional layer, instead of the thick edge of the first functional layer always overlapping with the thick edge of the second functional layer. Due to non-superposition of thickness and a multi-thickness superposition manner, after the base material is wound, the difference in thickness of different parts of the base material can be used, and finally thickness superposition of the thick edge on the same radial section can also be effectively improved, thereby effectively solving the problem of obvious bulging after the coating and winding of the base material are completed.

In summary, the present solution can significantly improve the condition of local bulging after the base material is coated and wound into a coil, and the flatness of the base material can be significantly improved, especially when used in the production of electrode sheets of a battery, which is beneficial to improving the overall quality of the electrode sheets of the electrode assembly, thereby improving the quality and performance of the battery.

In addition, in most conventional arrangements, the axial direction of the first coating roller and the axial direction of the second coating roller are both perpendicular to the line conveying direction of the base material. The reciprocating movement refers to a reciprocating movement between an initial position and a preset position, for example, a single-sided reciprocating movement at the initial position, which needs movement back and forth between a limit position on one side and the initial position. For another example, it may also be a double-sided reciprocating movement at the initial position, then it needs movement from the initial position to the limit position on one side first, and then movement back and forth between the limit positions on both sides, and finally it may or may not return to the initial position, but it needs to start from the initial position during the first movement, that is, it needs to return to the initial position before coating.

In some embodiments, the coating device further includes a second driving member connected to the second coating roller and configured to drive the second coating roller to reciprocate in the axial direction.

In the technical solution of the embodiment of the present application, the coating device is further configured with a second driving member that drives the second coating roller to reciprocate transversely in the axial direction, so that the position of the thick edge of the second functional layer coated on the base material by the second coating roller on the base material can also be changed, and as the base material is wound, the positions of the thick edges of the first functional layers on the plurality of turns of base materials can be staggered from each other, and will not all overlap and superpose on the same radial section, and similarly, the positions of the thick edges of the second functional layers can also be staggered from each other, and will not all overlap and superpose on the same radial section, thereby effectively solving the problem of obvious bulging after the coating and winding of the base material are completed.

It should be noted that, in the thickness direction of the base material, the thick edge of the first functional layer and the thick edge of the second functional layer may also be completely overlapped in projection, and although the thick edge of the first functional layer and the thick edge of the second functional layer are always overlapped, since both the first coating roller and the second coating roller reciprocate in the axial direction, the position of the thick edge of the first functional layer on the base material changes, and the position of the thick edge of the second functional layer on the base material also changes in the thickness direction of the base material. That is, as the base material is wound, the positions of the thick edges of the first functional layer between the plurality of turns of the base material may be at least partially staggered, and will not be all overlapped on the same radial section, which can utilize the thickness difference between different portions of the base material after the first functional layer and the second functional layer are coated, and can also effectively solve the problem of obvious bulging after the base material is coated and wound.

That is, as long as at least the first coating roller reciprocates in the axial direction thereof, it can have the technical effect of effectively improving the situation of thick edge thickness superposition on the same radial section after the base material is wound, and then can effectively solve the problem of obvious bulging after the base material is coated and wound.

In some embodiments, the first coating roller is a gravure roll or a microgravure roll; and the second coating roller is a gravure roll or a microgravure roll.

In the technical solution of the embodiment of the present application, the coating structure is a cell region etched on a roller surface of the gravure roll or the microgravure roll, and the cell region is generally a plurality of meshes or grooves with a uniform depth for accommodating the coating slurry to be coated, and the coating slurry can be adhered in a cell. The prepared paste-like viscous slurry is uniformly coated on a specific region of the base material through the cell region, and during coating, the thickness of each coating position needs to be consistent, and the coating thickness needs to be controlled within the tolerance range required by the process.

The difference between the gravure roll and the microgravure roll lies in that, on the one hand, when in use, the gravure roll needs to press the base material onto the gravure roll through the back pressure roll to realize the contact between the cell region and the surface of the base material, while the microgravure roll does not need the back pressure roll, and the microgravure coating method is a reverse and contact coating method, that is, the rotation direction of the microgravure roll is opposite to the feeding direction of the base material, and the base material does not need to be directly pressed against the microgravure roll through the back pressure roll. On the other hand, in general, the roll diameter of the microgravure roll is smaller, or the size of the cell on the microgravure roll is smaller, and the difficulty of processing and molding is greater than that of the gravure roll.

For example, the gravure roll is commonly a metal roll, the cell region of the gravure roll is also made of metal, and the mesh/groove size of the gravure roll is larger. After a ceramic material is sprayed on the roll surface of the microgravure roll, laser etching is adopted to form meshes; the cell size of the meshes is relatively small.

In the coating process, in order to reduce the possibility of the anilox roll interfering with other areas to cause the base material to generate concave-convex points, a stepped anilox roll, such as a microgravure roll, is generally selected. The microgravure roll generally includes a roll shaft and a protrusion disposed in a circumferential direction of the roll shaft and protruding from a curved surface of the roll shaft. A cell for bonding the slurry is disposed on the circumferential surface of the protrusion.

To achieve coating, other unmentioned structures of the coating device can refer to the related art. For example, the coating device may further include a first liquid storage groove, the first coating roller is rotatable relative to the first liquid storage groove and is partially located in the first liquid storage groove, the surface of the base material is tangent to the surface of the first coating roller, and the first functional layer is picked up and coated by rotating the first coating roller. In this way, with the rotation of the first coating roller, the first coating roller can pick up the slurry of the first functional layer in the first liquid storage groove and print and coat the slurry of the first functional layer to the first coating area. For another example, the coating device may further include a second liquid storage groove corresponding to the second coating roller; for another example, the coating device may further include an unwinding assembly, a winding assembly, a drying assembly for drying the functional layer, and the like. Details are not described herein again.

In a second aspect, provided is a coating method, including the following steps:
coating a first surface of a base material with a first functional layer by a first coating roller; and coating a second surface of the base material with a second functional layer by a second coating roller;
where the first coating roller is driven to reciprocate in an axial direction during coating of the first functional layer.

In the technical solution of the embodiment of the present application, consistent with the technical effect of the coating device described above, when the first coating roller and the second coating roller rotate around axial directions thereof and contact the surface of the base material, the sizing agent bonded in the coating structures thereof can be coated onto the surface of the base material. The first functional layer is coated on the first surface of the base material by the first coating roller, the second functional layer is coated on the second surface of the base material by the second coating roller, and in the width direction of the base material, the coating ranges of the first coating roller and the second coating roller are both smaller than the width of the base material, that is, the first coating roller and the second coating roller are configured to coat the front surface and the back surface of a part of the base material with materials having certain functions, thereby meeting the functional requirements required by the base material.

By driving the first coating roller to rotate around the axial direction to coat the first functional layer and driving the first coating roller to reciprocate in the axial direction, the edge of the coating structure of the first coating roller and the edge of the coating structure of the second coating roller may be staggered. After the coating is completed, in the thickness direction of the base material, since the edge of the first functional layer and the edge of the second functional layer are not completely overlapped in projection, the thickness superposition of the thick edge of the first functional layer and the thick edge of the second functional layer formed on the base material can be effectively solved. In addition, in the width direction of the base material, since the relative position between the thick edge of the first functional layer and the thick edge of the second functional layer changes, the axial reciprocating movement of the first coating roller may be periodic or aperiodic, but as the base material is wound, the positions of the thick edges of the first functional layer on the plurality of turns of the base material may be at least partially staggered, and will not be all overlapped on the same radial section, thereby effectively solving the problem of obvious bulging after the coating and winding of the base material are completed.

In a state where the second coating roller rotates only around the axis, although the position of the thick edge of the second functional layer formed on the base material is always unchanged in the width direction of the base material, the thick edge of the second functional layer is still overlapped on the same radial section after the base material is wound, since the first coating roller moves back and forth in the axial direction during the coating process of the first functional layer, for the thick edge of the second functional layer, in the thickness direction of the base material, for the thick edge of the second functional layer, some parts of the first surface corresponding to some parts do not have the first functional layer, some parts overlap with the thick edge of the first functional layer, and some parts overlap with the non-thick edge part of the first functional layer, instead of the thick edge of the first functional layer always overlapping with the thick edge of the second functional layer. Due to non-superposition of thickness and a multi-thickness superposition manner, after the base material is wound, the difference in thickness of different parts of the base material can be used, and finally thickness superposition of the thick edge on the same radial section can also be effectively improved, thereby effectively solving the problem of obvious bulging after the coating and winding of the base material are completed.

In summary, the coating method can significantly improve the condition of local bulging of the base material after the base material is coated and wound into a coil, and the flatness of the base material can be significantly improved, especially when used in the production of electrode sheets of a battery, which is beneficial to improving the overall quality of the electrode sheets of the electrode assembly, thereby improving the quality and performance of the battery.

In some embodiments, the coating method further includes: driving the second coating roller to reciprocate in the axial direction during coating of the second functional layer.

In the technical solution of the embodiment of the present application, the same as the action principle of "driving the first coating roller to reciprocate in the axial direction when the first functional layer is coated", the second coating roller rotates around the axis and also reciprocates in the axial direction, so that the position of the thick edge of the second functional layer coated on the base material by the second coating roller on the base material can also be changed, and as the base material is wound, the positions of the thick edges of the first functional layer on the plurality of turns of base materials can be staggered from each other, and will not be all overlapped on the same radial section, and similarly, the positions of the thick edges of the second functional layer can also be staggered from each other, and will not be all overlapped on the same radial section, thereby effectively solving the problem of obvious bulging after the coating and winding of the base material are completed.

In some embodiments, a frequency of the first coating roller reciprocating in the axial direction is controlled to be the same as a frequency of the second coating roller reciprocating in the axial direction.

In the technical solution of the embodiment of the present application, the first coating roller reciprocates in the axial direction at a certain frequency, and the axial reciprocating movement of the first coating roller is periodic reciprocating movement, which is not disordered. Similarly, the second coating roller also reciprocates in the axial direction at a certain frequency, and the axial reciprocating movement of the second coating roller is periodic reciprocating movement, which is not disordered.

By controlling the frequency of the axial reciprocating movement of the first coating roller to be the same as the frequency of the axial reciprocating movement of the second coating roller, the period of the axial reciprocating movement of the first coating roller is kept consistent with the period of the axial reciprocating movement of the second coating roller, which can facilitate the takt control of the process.

In some embodiments, driving the first coating roller to reciprocate in the axial direction during coating of the first functional layer specifically includes:
driving the first coating roller to reciprocate in the axial direction on a first side of an initial position thereof.

In the technical solution of the embodiment of the present application, the axial reciprocating movement of the first coating roller is only reciprocation between the initial position and the preset limit position on the first side, that is, at this time, the period of the axial reciprocating movement of the first coating roller is a time interval between two successive movements of the first coating roller from the initial position to the preset limit position on the first side after the first coating roller starts to move.

When the first functional layer is coated, the first coating roller is driven to reciprocate on the first side of the initial position of the first coating roller in the axial direction, so that the position of the edge of the first functional layer on the base material is changed, the edge of the coating structure of the first coating roller and the edge of the coating structure of the second coating roller may be partially staggered, and after coating is completed, in the thickness direction of the base material, since the edge of the first functional layer and the edge of the second functional layer are not completely overlapped in projection, the thickness superposition when the thick edge of the first functional layer and the thick edge of the second functional layer are formed on the base material can be effectively solved. Meanwhile, as the base material is wound, the positions of the thick edges of the first functional layers on the plurality of turns of the base material may be at least partially staggered, and may be not all overlapped on the same radial section, thereby effectively solving the problem of obvious bulging existing after the base material is coated and wound.

In some embodiments, driving the second coating roller to reciprocate in the axial direction during coating of the second functional layer specifically includes:
driving the second coating roller to reciprocate in the axial direction on a second side of an initial position thereof, where the first side is opposite to the second side.

In the technical solution of the embodiment of the present application, the axial reciprocating movement of the second coating roller is only reciprocation between the initial position and the preset limit position on the second side, that is, at this time, the period of the axial reciprocating movement of the second coating roller is a time interval between two successive movements of the second coating roller from the initial position to the preset limit position on the first side after the second coating roller starts to move.

By deviating and reciprocating the first coating roller only to the first side and deviating and reciprocating the second coating roller only to the second side, the position of the edge of the first functional layer on the base material is changed, and the position of the edge of the second functional layer on the base material is also changed, and at the same time, since the frequency of the axial reciprocating movement of the first coating roller is the same as the frequency of the axial reciprocating movement of the second coating roller, the first coating roller and the second coating roller always keep a consistent pace with opposite moving directions, and the edge of the coating structure of the first coating roller and the edge of the coating structure of the second coating roller can be partially staggered, thereby effectively solving the problem of the coil bulging after winding.

In some embodiments, driving the first coating roller to reciprocate in the axial direction during coating of the first functional layer specifically includes:
driving the first coating roller to reciprocate once on a first side of an initial position thereof and then reciprocate once on a second side of the initial position thereof in the axial direction, and repeating the movement.

In the technical solution of the embodiment of the present application, the path of the axial reciprocating movement of the first coating roller in one period is as follows: Initial position-limit position on first side-initial position-limit position on second side-initial position. The first coating roller repeatedly reciprocates according to the above path, that is, the double-sided reciprocating coating mode.

At this time, it can be known from analysis that when the second coating roller is always located at the initial position thereof to coat the second functional layer, the first coating roller adopts a double-sided reciprocating movement, and in the thickness direction of the base material, for the thick edge of the second functional layer, the region of the first surface corresponding to some parts is not provided with the first functional layer, and at this time, there is no thickness superposition, some parts are superposed with the thick edge of the first functional layer, and some parts are superposed with the non-thick edge part of the first functional layer, instead of the thick edge of the first functional layer always being superposed with the thick edge of the second functional layer in thickness. Since the first functional layer and the second functional layer have the possibility of non-superposition of thicknesses and superposition of various thicknesses, after the base material is wound, the difference in thickness of different portions of the base material can be used to effectively improve thickness superposition of the thick edge on the same radial section, thereby effectively solving the problem of obvious bulging after the coating and winding of the base material are completed.

In some embodiments, driving the second coating roller to reciprocate in the axial direction during coating of the second functional layer specifically includes:
driving the second coating roller to reciprocate once on a second side of an initial position thereof and then reciprocate once on the first side of the initial position thereof in the axial direction, and repeating the movement.

In the technical solution of the embodiment of the present application, in a manner similar to the axial reciprocating movement of the first coating roller, the path of the axial reciprocating movement of the second coating roller in one period is as follows: Initial position-limit position of second side-initial position-limit position of first side-initial position. The second coating roller repeatedly reciprocates according to the above path, which is a double-sided reciprocating coating mode.

The positions of the edge of the first functional layer and the edge of the second functional layer on the base material are both changed, and at the same time, since the frequency of the reciprocating movement of the first coating roller in the axial direction is the same as the frequency of the reciprocating movement of the second coating roller in the axial direction, the first coating roller and the second coating roller always keep a consistent pace with opposite moving directions, and the edge of the coating structure of the first coating roller and the edge of the coating structure of the second coating roller can be partially staggered, thereby effectively solving the problem of bulging of the coiled material after winding.

At this time, it can be known from analysis that, in the thickness direction of the base material, for the thick edge of the second functional layer, the region of the first surface corresponding to some parts is not provided with the first functional layer, and at this time, there is no thickness superposition, some parts are superposed with the thick edge of the first functional layer, and some parts are superposed with the non-thick edge part of the first functional layer, instead of the thick edge of the first functional layer always being superposed with the thick edge of the second functional layer in thickness. Since the first functional layer and the second functional layer have the possibility of non-superposition of thicknesses and superposition of various thicknesses, after the base material is wound, the difference in thickness of different portions of the base material can be used to effectively improve thickness superposition of the thick edge on the same radial section, thereby effectively solving the problem of obvious bulging after the coating and winding of the base material are completed.

In some embodiments, the coating method further includes: controlling a web travel time of the base material between the first coating roller and the second coating roller to be t; and
according to the web travel direction of the base material, controlling the first coating roller and the second coating roller to reciprocate in the axial direction successively, and controlling a time difference between the successive reciprocating movements in the axial direction to be t.

In the technical solution of the embodiment of the present application, it can be understood that with reference to the same region of the base material, the region is in contact with the first coating roller, and the first coating roller starts to reciprocate along the axis as a timing start point, and after a time t, the region starts to be in contact with the second coating roller, and the second coating roller starts to reciprocate along the axis while being in contact with the region.

When the web travel speed of the base material is always constant, the web travel time of the base material between the first coating roller and the second coating roller is t, and the length of the material of the base material traveling from the first coating roller to the second coating roller can be obtained. By setting the time interval between the axial reciprocating movement of the first coating roller and the axial reciprocating movement of the second coating roller to be t, the portion of the base material that the first coating roller contacts when starting to move laterally is consistent with the portion of the base material that the second coating roller contacts when starting to move laterally, so that the coating start point of the first coating roller reciprocating back and forth in the axial direction is consistent with the coating start point of the second coating roller reciprocating back and forth in the axial direction.

It should be noted that the sequence of the first coating roller and the second coating roller is determined by the specific situation of the arrangement on the production line, and among the first coating roller and the second coating roller, the one located upstream first reciprocates in the axial direction, and the one located downstream then reciprocates along the axis.

In some embodiments, a maximum offset distance of the first coating roller relative to the initial position thereof in the axial direction is controlled to be L, and L≤5 mm.

In the technical solution of the embodiment of the present application, theoretically, the preset coating region of the first surface corresponds to the range coated by the first coating roller at the initial position, and similarly, the preset coating region of the second surface corresponds to the range coated by the second coating roller at the initial position. The coating region of the first coating roller which deviates from the initial position in the axial direction is therefore not a preplanned coating region. By controlling the maximum offset distance of the first coating roller relative to the initial position thereof in the axial direction to be no more than 5 mm, the problem of obvious bulging of the base material after coating and winding can be effectively solved by improving the process, and the deviation of the coating range can be reduced, which can reduce the influence on the subsequent process and the final required performance of the base material.

It should be noted that the maximum offset distance L of the first coating roller relative to the initial position thereof in the axial direction refers to the maximum offset distance on one side relative to the initial position thereof. In some embodiments, when the first coating roller adopts a double-sided reciprocating movement solution, the maximum offset distance of the first coating roller on the first side and the second side should not exceed 5 mm.

For example, in some embodiments, L may be selected from 0.2 mm, 0.4 mm, 0.6 mm, 0.8 mm, 1.2 mm, 1.5 mm, 1.6 mm, 2 mm, 2.3 mm, 2.5 mm, 2.8 mm, 3 mm, 3.5 mm, 3.8 mm, 4 mm, 4.3 mm, 4.5 mm, 4.8 mm, 5 mm, and the like.

In some embodiments, L≥0.5 mm.

In the technical solution of the embodiment of the present application, by making the maximum offset distance L of the first coating roller relative to the initial position thereof in the axial direction not more than 0.5 mm, the technical effect of effectively solving the obvious bulging after coating and winding of the base material can be achieved, and the influence on the preset region where the first functional layer and the second functional layer do not need to be coated can be reduced, especially in some embodiments, the functional layers of other properties may also be coated in the regions adjacent to the first functional layer and the second functional layer.

For example, in some embodiments, L may be selected from 0.08 mm, 0.1 mm, 0.15 mm, 0.2 mm, 0.24 mm, 0.26 mm, 0.3 mm, 0.32 mm, 0.36 mm, 0.38 mm, 0.4 mm, 0.42 mm, 0.44 mm, 0.45 mm, 0.46 mm, 0.49 mm, 0.5 mm, and the like.

In some embodiments, driving the first coating roller to reciprocate in the axial direction during coating of the first functional layer specifically includes:
controlling the axial movement of the first coating roller to pause at least once during the process of the first coating roller moving from the initial position to the limit position farthest away from the initial position;
and/or, controlling the axial movement of the first coating roller to pause at least once during the process of the first coating roller moving from the limit position farthest from the initial position to the initial position.

In the technical solution of the embodiment of the present application, in the process of the reciprocating movement of the first coating roller, in the process of the first coating roller moving from the initial position to the limit position farthest away from the initial position, and/or in the process of the first coating roller moving from the limit position farthest away from the initial position to the initial position, the axial movement of the first coating roller is controlled to pause at least once. That is, in the two processes of the first coating roller being deviated from the initial position and returned to the initial position, the axial traverse of at least one of the first coating roller and the second coating roller is not a continuous movement but an intermittent movement. During the pause of the movement of the first coating roller, the base material is still conveyed at a preset speed.

By reasonably setting the relationship among the parameters such as the distance of a single movement of the first coating roller, the web travel length of the base material corresponding to the single movement, the time of a single pause, and the web travel length of the base material corresponding to the single pause, the thick edge of the first functional layer and the thick edge of the second functional layer on each turn of the base material after winding can be effectively staggered, so that the thick edges of the first functional layer and the second functional layer are not only superposed in thickness on the corresponding radial section, thereby effectively solving the problem of obvious bulging after the coating and winding of the base material are completed.

In a third aspect, further provided is a battery production line, including the coating device described above, where the coating device is configured to coat a base material of an electrode sheet of a battery with a functional layer.

Additional aspects and advantages of the present application will be partly provided in the following description, and partly become evident in the following description or understood through the practice of the present application.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic diagram of a structure of a vehicle.
FIG. 2 is a schematic structural diagram of a battery.
FIG. 3 is a schematic structural diagram of a battery cell.
FIG. 4 is a schematic structural diagram of a coating device provided by some embodiments of the present application.
FIG. 5 is a schematic diagram of coating a same portion of a base material with a functional layer by a coating device provided by some embodiments of the present application at some moments when a first coating roller and a second coating roller are both located at initial positions.
FIG. 6 is a schematic diagram of a coating range of the same part of a base material coated by a coating device provided by some embodiments of the present application at certain moments, when a first coating roller deviates from an initial position and a second coating roller is at the initial position.
FIG. 7 is a schematic diagram of a first functional layer and a second functional layer coated by a coating device provided by some embodiments of the present disclosure conforming to a state of FIG. 6.
FIG. 8 is a schematic diagram of a first functional layer and a second functional layer coated by a coating device according to still some embodiments of the present disclosure that conform to a state of FIG. 6.
FIG. 9 is a schematic diagram of a coating range of the same part of a base material when a first coating roller and a second coating roller both deviate from an initial position and deviate to different sides at some moments in a coating device provided by some embodiments of the present application.
FIG. 10 is a schematic diagram of a first functional layer and a second functional layer coated by a coating device provided by some embodiments of the present disclosure conforming to a state of FIG. 9.
FIG. 11 is a schematic diagram of a first functional layer and a second functional layer coated by a coating device according to still some embodiments of the present disclosure that conform to a state of FIG. 9.
FIG. 12 is a process schematic diagram of a coating method provided by some embodiments of the present application.

Reference number: 1000, vehicle; 100, battery; 200, motor; 300, controller; 110, box body; 111, first portion; 112, second portion; 120, battery cell; 121, casing; 122, end cover; 123, electrode assembly;
10, coating device; 11, first coating roller; 12, second coating roller; 13, first driving member; 14, second driving member; 15, drying assembly;
20, base material; 30, first functional layer; 40, second functional layer.

### DETAILED DESCRIPTION OF PREFERRED EMBODIMENTS

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the present application, "plurality" means two or more than two (including two). Similarly, "a plurality of groups" means two or more than two groups, and "a plurality of pieces" means two or more than two pieces.

The battery mentioned in the present application is a single physical module that includes one or more battery cells for providing a higher voltage and capacity. For example, the battery mentioned in the present application may include a battery module, a battery pack, or the like.

At present, in view of the development of the market, the use of traction batteries is becoming increasingly more widespread. Traction batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of traction batteries continues to expand, a market demand for traction batteries continues to increase.

Coating refers to applying a coating material in liquid or powder form to the surface of objects such as a fabric, paper, a metal foil or a plate, to form a thin coated layer thereon. In order to improve the electrical performance and safety performance of the lithium-ion battery, coating is an indispensable step in the production process of the battery cell, and is also a key process that directly affects performance of the battery such as safety, capacity, and life. In the production process of the battery cell, the coating process is used to coat the positive electrode active substance on the positive electrode current collector and the negative electrode active substance on the negative electrode current collector, that is, the prepared paste-like viscous slurry (positive electrode active substance or negative electrode active substance) is uniformly, continuously or intermittently coated on the base material (positive current electrode collector or negative electrode current collector).

However, due to the coating characteristics, the thickness of the edge of the coated functional layer will be slightly greater than the thickness of the middle portion of the functional layer, and the functional layer will form a thick edge on the base material. If the first coating roller and the second coating roller rotate only in the axial direction, and the coating structure of the first coating roller and the coating structure of the second coating roller are always directly opposite to each other, the thick edge of the first functional layer and the thick edge of the second functional layer will be directly superposed in the thickness direction of the base material, and then after the base material is wound, the superposed portions of the thick edges of the plurality of turns of the base material will be superposed again in the thickness direction on the corresponding radial cross section of the coil, so that the coil after being wound is obviously bulged, which not only affects the subsequent production process, but also affects the overall flatness of the base material, and the base material is easily deformed in the width direction, has a radian, and the like, and when the base material is a base material (such as aluminum foil) of an electrode sheet of a battery, the quality and performance of the finished battery product will be affected.

Based on the above considerations, in order to solve the problem of obvious bulging existing after the base material is coated with the functional layer and wound, a coating device, a coating method and a battery production line are designed. The coating device includes a first coating roller, a second coating roller and a first driving member, where the first coating roller is configured to coat a first surface of the base material with a first functional layer; in a web travel direction of the base material, the second coating roller is arranged at the downstream or upstream of the first coating roller and configured to coat the second surface with a second functional layer, and the first driving member is connected to the first coating roller and configured to drive the first coating roller to reciprocate in an axial direction. In the thickness direction of the base material, the first surface and the second surface are opposed to each other.

The first coating roller is driven by the first driving member to reciprocate in the axial direction, so that the first coating roller can also reciprocate in the axial direction while rotating around the axial direction thereof, and thus the edge of the coating structure of the first coating roller and the edge of the coating structure of the second coating roller can be staggered. After the coating is completed, in the thickness direction of the base material, since the edge of the first functional layer and the edge of the second functional layer are not completely overlapped in projection, the thickness superposition of the thick edge of the first functional layer and the thick edge of the second functional layer formed on the base material can be effectively solved. In addition, in the width direction of the base material, since the relative position between the thick edge of the first functional layer and the thick edge of the second functional layer changes, the axial reciprocating movement of the first coating roller may be periodic or aperiodic, but as the base material is wound, the positions of the thick edges of the first functional layer on the plurality of turns of the base material may be at least partially staggered, and will not be all overlapped on the same radial section, thereby effectively solving the problem of obvious bulging after the coating and winding of the base material are completed.

In order to solve the problem that the edge of the coated functional layer forms a thick edge relative to the middle portion, the solution adopted in the related art is to improve the structure of the coating roller, for example, the cell of the gravure roll is configured as a structure with a non-uniform depth dimension, so that the cell depth of the portion corresponding to the thick edge is smaller than the cell depth of the non-thick edge portion of the corresponding portion. However, this solution has certain limitations and implementation difficulties in practical application, and is particularly obvious when applied to microgravure coating. Due to the structural characteristics of the microgravure roll and the requirement of the cell arrangement thereon, the part of the microgravure roll that etches the cell is made of a ceramic material, and the cell density of the microgravure roll is much greater than the cell density of the gravure roll, the manufacture of the microgravure roll itself has certain processing difficulties. On this basis, the difficulty of etching cells of different depths on the ceramic roller surface is further improved, and the problem of large etching position deviation is prone to occur. Meanwhile, due to the problem of processing accuracy, the thin area is large, and it is difficult to perform thinning etching in the region with a narrow edge. In addition, after processing and manufacturing and before putting the microgravure roll into use, it is also necessary to detect whether the cell meets the requirements, the detection difficulty is also relatively high, and the detection yield of the microgravure roll is also relatively low, and it is also necessary to re-process and design a new microgravure roll for different coating requirements, which is time-consuming and labor-intensive, and is not conducive to popularization and use.

Therefore, compared with the idea of solving the above technical problems for the structure of the coating roller in the related art, the present application improves the process method from the beginning of the process method, and provides a technical solution with a completely different idea. The present application can be applied to the fields of micro-concave coating and gravure coating, and does not need to change the structure of the existing coating roller, that is, the coating structure on the first coating roller and the second coating roller is a conventional and uniform structure, that is, the existing gravure roll and microgravure roll with uniform cell depth can be put into use to achieve the technical effect of solving the bulging problem, which saves time and labor, and can be widely popularized and applied.

The coating device disclosed in the embodiment of the present application can, but is not limited to, production of electrode sheets of batteries. It should be noted that the battery mentioned in the present application refers to a single physical module including one or more battery cells to provide a higher voltage and capacity. For example, the battery mentioned in the present application may include a battery pack and the like. The battery may be used as a power supply or a power supply system of the electric device, which is beneficial to improving the overall performance of the battery and facilitating the popularization of the battery.

The electrical device can be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electrical device is a vehicle.

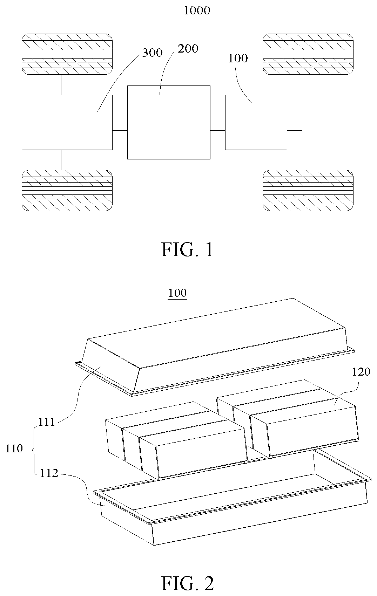

Reference is made to FIG. 1. FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. A battery 100 is arranged inside the vehicle 1000. The battery 100 may be arranged at a bottom, head, or tail of the vehicle 1000. The battery 100 may be configured to power the vehicle 1000. For example, the battery 100 may be used as an operating power source of the vehicle 1000. The vehicle 1000 may further include a controller 300 and a motor 200, where the controller 300 is configured to control the battery 100 to power the motor 200, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Referring to FIG. 2, FIG.2 is an exploded view of a battery 100 according to some embodiments of the present application. The battery 100 comprises a box body 110 and a battery cell 120. The battery cell 120 is accommodated in the box body 110. Here, the box body 110 is configured to provide an accommodating space for the battery cell 120, and the box body 110 may adopt multiple structures. In some embodiments, the box body 110 may include a first portion 111 and a second portion 112, where the first portion 111 and the second portion 112 are mutually engaged in a covering manner to define an accommodating space for accommodating the battery cell 120. The second portion 112 may be of a hollow structure with an opening at one end, the first portion 111 may be of a plate-shaped structure, and the first portion 111 covers an opening side of the second portion 112, such that the first portion 111 and the second portion 112 jointly define the accommodating space. The first portion 111 and the second portion 112 may each be of a hollow structure with an opening in one side, with the opening side of the first portion 111 covering the opening side of the second portion 112. Certainly, the box body 110 formed by the first portion 111 and the second portion 112 may be in various shapes such as a cylinder and a cuboid.

In the battery 100, a plurality of battery cells 120 may be provided, and the plurality of battery cells 120 may be subjected to series connection, parallel connection, or series-parallel connection. The series-parallel connection means that the plurality of battery cells 120 are subjected to both series connection and parallel connection. The plurality of battery cells 120 may be directly connected in series, in parallel, or in a combination of both, and the whole of the plurality of battery cells 120 is accommodated in the box 110. Certainly, the battery 100 may also be formed in a manner that a plurality of battery cells 120 are subjected to series connection, parallel connection, or series-parallel connection to form battery modules, and the plurality of battery modules are then subjected to series connection, parallel connection, or series-parallel connection to form an integrated unit, which is accommodated in the box body 110. The battery 100 may further comprise other structures. For example, the battery 100 may further include a busbar component for implementing an electrical connection between the plurality of battery cells 120.

Each battery cell 120 may be a secondary battery or a primary battery; or may be a lithium-sulfur battery, a sodium-ion battery, or a magnesium-ion battery, but is not limited thereto. The battery cell 120 may be in a shape of a cylinder, a flat body, a cuboid, or in other shapes.

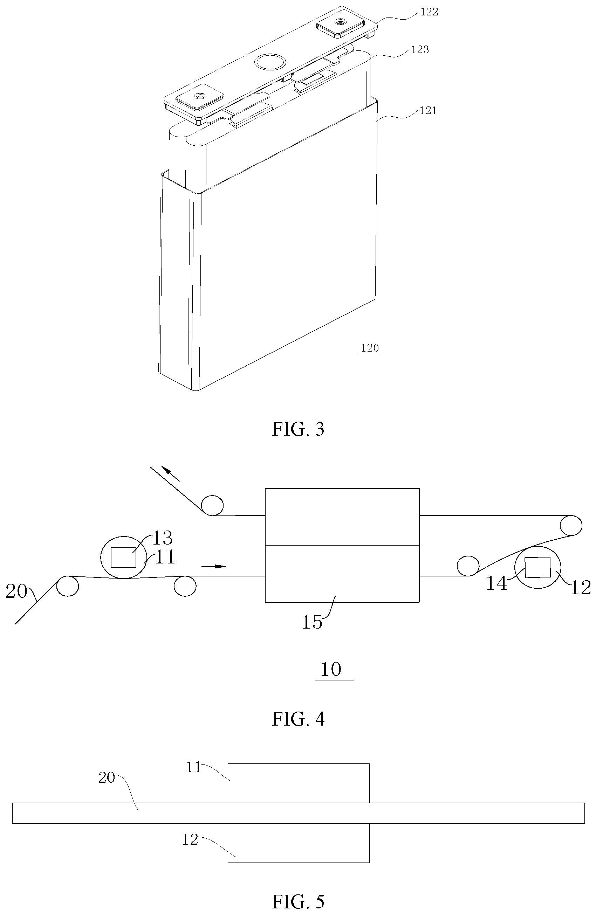

As shown in FIG. 3, the battery cell 120 may include a housing, an electrode assembly 123, and an electrode terminal. The casing includes a housing 121 and an end cover 122. The housing 121 is provided with an opening, and the end cover 122 seals the opening to isolate an internal environment of the battery cell 120 from an external environment.

The housing 121 is an assembly for cooperating with the end cover 122 to form the internal environment of the battery cell 120, where the formed internal environment may be used to accommodate the electrode assembly 123, an electrolyte solution, and other components. The housing 121 and the end cover 122 may be independent components. The housing 121 may be of various shapes and sizes. Specifically, the shape of the housing 121 may be determined according to a specific shape and dimension of the electrode assembly 123. The housing 121 may be made of various materials, for example, copper, iron, aluminum, stainless steel, an aluminum alloy, a plastic, and the like.

The end cover 122 is a component that covers the opening of the housing 121 to isolate the internal environment of the battery cell 120 from the external environment. Without limitation, the shape of the end cover 122 may adapt to the shape of the casing 121 to fit the casing 121. Optionally, the end cover 122 may be made of a material with certain hardness and strength (e.g., an aluminum alloy). Thus, the end cover 122 is less prone to deformation under compressive impact, thereby enabling the battery cell 120 to have higher structural strength and improved reliability. The end cover 122 may be provided with a functional component such as an electrode terminal. The electrode terminal may be configured to be electrically connected to the electrode assembly 123 for outputting or inputting electric energy of the battery cell 120. The end cover 122 may be made of various materials, such as copper, iron, aluminum, stainless steel, aluminum alloy, and plastic. The embodiments of the present application impose no special limitations thereto. In some embodiments, an insulation structure may be further disposed on an inner side of the end cover 122, and the insulation structure may be configured to isolate an electrical connection component in the casing 121 from the end cover 122 to reduce the risk of a short circuit. For example, the insulation structure may be made of plastic, rubber, or the like.

The electrode assembly 123 is a component in the battery cell 120 in which an electrochemical reaction occurs. The casing 121 may include one or more electrode assemblies 123. The electrode assembly 123 is mainly formed by winding or stacking a positive electrode sheet and a negative electrode sheet, and a separator is generally disposed between the positive electrode sheet and the negative electrode sheet for separating the positive electrode sheet from the negative electrode sheet to avoid an inner short circuit between the positive electrode sheet and the negative electrode sheet. Parts of the positive electrode sheet and the negative electrode sheet with an active substance constitute a main body portion of the electrode assembly 123, and parts of the positive electrode sheet and the negative electrode sheet without an active substance each constitute a tab. A positive tab and a negative tab may both be located at one end of the main body portion or be located at two ends of the main body portion respectively. During charging and discharging of the battery 100, a positive electrode active substance and a negative electrode active substance react with the electrolyte solution, and the tab is connected to the electrode terminal to form a current circuit. In addition, the electrode assembly 123 may be of a winding structure or may be of a laminated structure.

In some embodiments, the battery cell 120 may also be provided with a pressure relief mechanism for relieving an internal pressure when the internal pressure or temperature of the battery cell 120 reaches a threshold.

According to some embodiments of the present application, FIG. 4 is a schematic structural diagram of a coating device 10 in the present application. As shown in FIG. 4, the present application provides a coating device 10, configured to coat a base material 20 with functional layers. Along the thickness direction of the base material 20, the base material 20 includes a first surface and a second surface opposite to each other.

The functional layer is a functional slurry coated on the surface of the base material 20 to enable the base material 20 to have a function consistent with the material characteristics of the base material, and the functional layer plays different roles on the surface of the base material 20 according to the type of the slurry, and the coating range of the functional layer is also selected according to the required function, that is, the functional layer may partially cover the surface of the base material 20 or completely cover the surface of the base material 20. For example, the functional layer may be a primer slurry, an insulating slurry, or another functional slurry. There are various optional functional layers, generally in the field of the battery 100, a common primer layer, an active material layer, an insulating layer, and the like.

Specifically, the primer slurry includes a functional material, a binder and a conductive agent. The binder may be selected from at least one of polyvinylidene fluoride, a copolymer of vinylidene fluoride-hexafluoropropylene, polyamide, polyacrylonitrile, polyacrylate, polyacrylic acid, polyacrylate salt, sodium carboxymethyl cellulose, polyvinylpyrrolidone, polyvinyl ether, polymethyl methacrylate, polytetrafluoroethylene, polyhexafluoropropylene and styrenebutadiene rubber. The conductive agent may be selected from at least one of carbon black, a carbon fiber, a carbon nanotube, graphite, graphene, metal powder, a composite conductive material and conductive ceramic powder.

Specifically, the insulating adhesive is at least one of oil-based epoxy resin, a bismaleimide resin, water-based polyvinylidene fluoride, and polyimide. The insulating coating is a coating of metal oxide particles, and the material of the coating specifically includes metal oxide particles, polyvinylidene fluoride and N-methylpyrrolidone, where the material of the metal oxide particles can also be selected from aluminum oxide, titanium dioxide, zinc oxide, magnesium oxide and combinations thereof.

Specifically, the active material layer includes at least one of lithium nickel cobalt manganese oxide, lithium iron phosphate, lithium nickelate, lithium nickel manganese oxide, and lithium manganese iron nickelate. The active substance is divided into a positive electrode active substance and a negative electrode active substance, that is, the positive electrode active substance is used in the active material slurry of the positive electrode sheet, and the negative electrode active substance is used in the active material slurry of the negative electrode sheet.

The base material 20 is generally of a regular structure. The first surface and the second surface of the base material 20 having a common regular shape are directly opposite to each other, and in the width direction of the base material 20, the two edges of the first surface and the two edges of the second surface are correspondingly projected and overlapped. In a special-shaped base material 20, the first surface and the second surface may be staggered.

The coating device 10 includes a first coating roller 11, and the first coating roller 11 is configured to coat the first surface with the first functional layer 30.

The first coating roller 11 is a member that has a coating structure and is capable of coating the first surface of the base material 20 with the slurry of the first functional layer 30.

The coating device 10 further includes a second coating roller 12, and in the web travel direction of the base material 20, the second coating roller 12 is arranged at the downstream or upstream of the first coating roller 11, and is configured to coat the second surface with the second functional layer 40.

The second coating roller 12 is a member that has a coating structure and capable of coating the first surface of the base material 20 with the slurry of the second functional layer 40.

In the web travel direction of the base material 20, the second coating roller 12 is arranged at the downstream or upstream of the first coating roller 11, that is, the positions of the first coating roller 11 and the second coating roller 12 may be set according to requirements, and in some embodiments, the base material 20 may sequentially pass through the first coating roller 11 and the second coating roller 12 during web traveling, and the first functional layer 30 on the first surface and the second functional layer 40 on the second surface are sequentially coated. In some other embodiments, the base material 20 may pass through the second coating roller 12 and the first coating roller 11 in sequence during web traveling, and the second functional layer 40 on the second surface and the first functional layer 30 on the first surface are coated in sequence.

The first coating roller 11 and the second coating roller 12 are both provided with a coating structure capable of bonding a slurry, and when the first coating roller 11 and the second coating roller 12 rotate around axial directions thereof and contact the surface of the base material 20, the slurry bonded in the coating structures thereof can be coated onto the surface of the base material 20. The first surface of the base material 20 is coated with the first functional layer 30 by the first coating roller 11, the second surface of the base material 20 is coated with the second functional layer 40 by the second coating roller 12, and in the width direction of the base material 20, the coating ranges of the first coating roller 11 and the second coating roller 12 are both smaller than the width of the base material 20, that is, the first coating roller and the second coating roller are configured to coat the front surface and the back surface of a part of the base material 20 with materials having certain functions, thereby meeting the functional requirements required by the base material 20.

When the base material 20 of the electrode sheet of the battery 100 is coated, the first functional layer 30 and the second functional layer 40 are coated on the front and back sides of the same region, and therefore are the same slurry, for example, both are insulating materials, or both are active materials that can react with the electrolyte solution. In some other fields, the first surface and the second surface of the base material 20 may have different functions, and specific materials of the first functional layer 30 and the second functional layer 40 may be selected according to requirements, that is, the materials and functions of the slurries of the first functional layer 30 and the second functional layer 40 may be the same or different.

The coating device 10 further includes a first driving member 13, and the first driving member 13 is connected to the first coating roller 11 and configured to drive the first coating roller 11 to reciprocate in the axial direction.

The first driving member 13 is a member capable of driving the first coating roller 11 to reciprocate in the axial direction, and may be any linear transmission mechanism, such as a servo motor transmission mechanism, a rack and pinion transmission mechanism, a ball screw transmission mechanism, a hydraulic transmission mechanism, a push rod transmission mechanism, and a screw pair transmission mechanism.

Due to the characteristics of the coating process, the thickness of the edge of the coated functional layer will be slightly greater than the thickness of the middle portion of the functional layer, and the functional layer will form a thick edge. If the first coating roller 11 and the second coating roller 12 only rotate in the axial direction, and the coating structure of the first coating roller 11 and the coating structure of the second coating roller 12 are always directly opposite to each other, the thick edge of the first functional layer 30 and the thick edge of the second functional layer 40 will be directly superposed in the thickness direction of the base material 20, and then after the base material 20 is wound, the superposed portions of the thick edges of the plurality of turns of the base material 20 will be superposed again in the thickness direction of the corresponding radial cross section of the coil, so that the coil after being wound is obviously bulged, which not only affects the subsequent production process, but also affects the overall flatness of the base material 20, and the base material 20 is easily deformed in the width direction, has a radian, etc., and when the base material 20 is the base material 20 of the electrode sheet of the battery 100, the quality and performance of the finished product of the battery 100 will be affected.

Therefore, in order to solve the above problem found, in this solution, by disposing the first driving member 13 that drives the first coating roller 11 to reciprocate in the axial direction, the first coating roller 11 can also reciprocate in the axial direction while rotating around the axial direction thereof, so that the edge of the coating structure of the first coating roller 11 and the edge of the coating structure of the second coating roller 12 can be staggered. After the coating is completed, in the thickness direction of the base material 20, since the edge of the first functional layer 30 and the edge of the second functional layer 40 are not completely overlapped in projection, the thickness superposition of the thick edge of the first functional layer 30 and the thick edge of the second functional layer 40 formed on the base material 20 can be effectively solved. In addition, in the width direction of the base material 20, since the relative position between the thick edge of the first functional layer 30 and the thick edge of the second functional layer 40 changes, the axial reciprocating movement of the first coating roller 11 may be periodic or non-periodic, but as the base material 20 is wound, the positions of the thick edges of the first functional layer 30 on the plurality of turns of the base material 20 may be at least partially staggered, and may not be all overlapped on the same radial section, thereby effectively solving the problem of obvious bulging after the coating and winding of the base material 20 are completed.

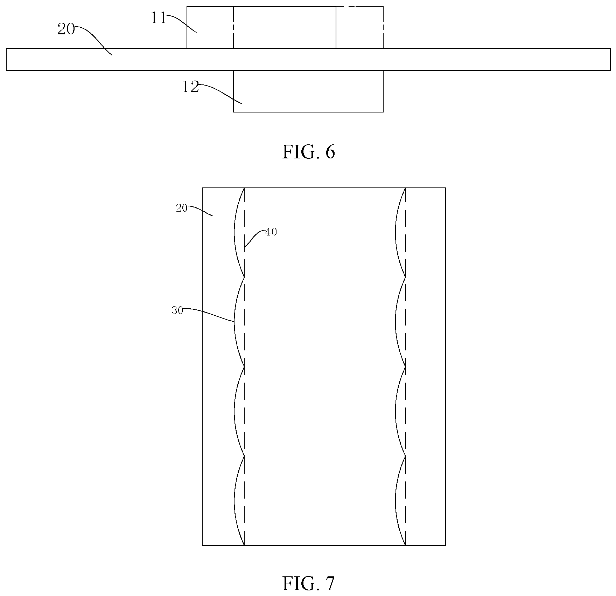

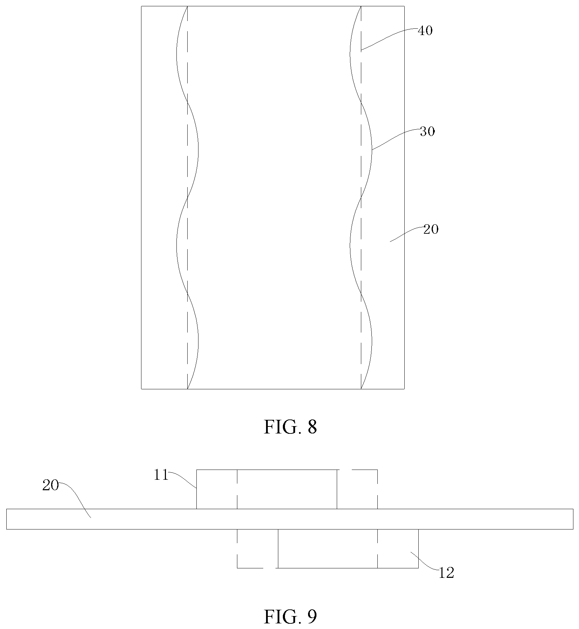

It should be noted that, as shown in FIG. 5 and FIG. 6, the first coating roller 11 is driven by the first driving member 13 to be repeatedly switched between an initial position and a state of deviating from the initial position in the axial direction, and the second coating roller 12 is always located at the initial position. FIG. 5 shows a state in which the coating structure of the first coating roller 11 and the coating structure of the second coating roller 12 are both located at the initial position and directly facing each other. FIG. 6 shows a state in which the first coating roller 11 is misaligned with the second coating roller 12 after being deviated, and the dashed line in FIG. 6 represents a schematic diagram of the first coating roller 11 at the initial position. In a state where the second coating roller 12 only rotates around the axis, although the position of the thick edge of the second functional layer 40 formed on the base material 20 is always unchanged in the width direction of the base material 20, the thick edge of the second functional layer is still overlapped on the same radial section after the base material 20 is wound. Since the first coating roller 11 reciprocates in the axial direction, in the thickness direction of the base material 20, for the thick edge of the second functional layer 40, some parts of the first surface corresponding to some parts are not provided with the first functional layer 30, some parts are overlapped with the thick edge of the first functional layer 30, and some parts are overlapped with the non-thick edge part of the first functional layer 30, instead of the thick edge of the first functional layer 30 always overlapped with the thick edge of the second functional layer 40. As shown in FIG. 7 and FIG. 8, the solid lines in FIG. 7 and FIG. 8 are the edges of the first functional layer 30, and the dashed lines in FIG. 7 and FIG. 8 are the edges of the second functional layer 40, and in this case, the thickness at the edges is only superposed at the edges of the projection overlapping portions closest to the center of the coated region. Due to non-superposition of thickness and a multi-thickness superposition manner, after the base material 20 is wound, the difference in thickness of different parts of the base material 20 can be used, and finally thickness superposition of the thick edge on the same radial section can also be effectively improved, thereby effectively solving the problem of obvious bulging of the base material 20 after coating and winding.

In contrast, in the related art, in the solution in which both the first coating roller 11 and the second coating roller 12 are set to be fixed in position in the axial direction, it can be known from analysis that after coating is completed, the thick edge of the first functional layer 30 and the thick edge of the second functional layer 40 are completely overlapped in projection and are fixed in position on the base material 20 of the electrode sheet, and the thick edges will be continuously superposed for a plurality of turns on the radial cross section after the base material 20 is wound, which finally causes the coil to be obviously bulged. If only the coating region of the first coating roller 11 and the coating region of the second coating roller 12 are staggered to a certain extent, but are still in a coating solution with a fixed position in the axial direction, although the thick edge of the first functional layer 30 and the thick edge of the second functional layer 40 can be staggered to a certain extent, since the position of the thick edge on the base material 20 is still unchanged, the thick edges will still be continuously superposed on the radial cross section after winding, that is, there will still be a corresponding technical problem. Only by the thick edge of the first functional layer 30 and the thick edge of the second functional layer 40 being superposed, instead, the thick edge of the first functional layer 30 and the non-thick edge region of the second functional layer 40 directly facing the thick edge of the first functional layer are superposed in thickness, and the thick edge of the second functional layer 40 and the non-thick edge region of the first functional layer 30 directly facing the thick edge of the second functional layer are superposed in thickness, and thus obvious bulging will still appear after final winding.

In summary, compared with the technical solutions of the related art, the present application does not consider the improvement of the coating structures and arrangement positions of the first coating roller 11 and the second coating roller 12, and essentially, by improving the operation flow of the coating process, the coating roller that has been put into use on the existing production line and will form obvious bulging after being wound can still be applied. This solution can significantly improve the condition of local bulging after the base material 20 is coated and wound into a coil, and the flatness of the base material 20 is significantly improved, especially when used for the production of the electrode sheet of the battery 100, which is beneficial to improve the overall quality of the electrode sheet of the electrode assembly 123, thereby improving the quality and performance of the battery 100.

In addition, in most conventional arrangements, the axial direction of the first coating roller 11 and the axial direction of the second coating roller 12 are both perpendicular to the web travel direction of the base material 20. The reciprocating movement refers to a reciprocating movement between an initial position and a preset position, for example, a single-sided reciprocating movement at the initial position, which needs to be a reciprocating movement between a limit position on one side and the initial position, and at this time, the projection relationship between the coated first functional layer 30 and the second functional layer 40 is as shown in FIG. 7. For another example, it may also be a double-sided reciprocating movement at the initial position, then it needs movement from the initial position to the limit position on one side first, and then movement back and forth between the limit positions on both sides, and finally it may or may not return to the initial position, but it needs to start from the initial position during the first movement, that is, it needs to return to the initial position before starting coating, and the projection relationship between the coated first functional layer 30 and second functional layer 40 is as shown in FIG. 8.

According to some embodiments of the present application, the coating device 10 further includes a second driving member 14 connected to the second coating roller 12 and configured to drive the second coating roller 12 to reciprocate in the axial direction.

The second driving member 14 is a member capable of driving the second coating roller 12 to reciprocate in the axial direction, and may be any linear transmission mechanism, such as a servo motor transmission mechanism, a gear-rack transmission mechanism, a ball screw transmission mechanism, a hydraulic transmission mechanism, a push rod transmission mechanism, and a screw pair transmission mechanism.

In the above technical solution, the coating device 10 is further configured with a second driving member 14 for driving the second coating roller 12 to reciprocate in the axial and transverse directions, so that the position of the thick edge of the second functional layer 40 coated on the base material 20 by the second coating roller 12 on the base material 20 can also be changed, and as the base material 20 is wound, the positions of the thick edges of the first functional layers 30 on the plurality of turns of the base material 20 can be staggered from each other, and will not be all overlapped on the same radial section, and similarly, the positions of the thick edges of the second functional layers 40 can also be staggered from each other, and will not be all overlapped on the same radial section, thereby effectively solving the problem of obvious bulging existing after the coating and winding of the base material 20 are completed.

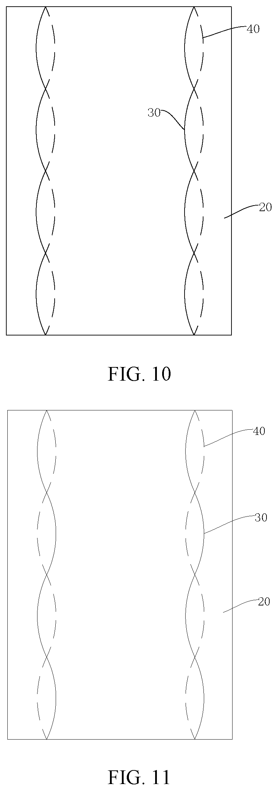

As shown in FIG. 9, when coating the same region of the base material 20, the first coating roller 11 and the second coating roller 12 may be offset toward different sides, so that the thick edge of the first functional layer 30 and the thick edge of the second functional layer 40 can be staggered or partially staggered. In some embodiments, the first coating roller 11 and the second coating roller 12 may reciprocate on the first side and the second side of the initial position, respectively, and at this time, the first functional layer 30 and the second functional layer 40 formed by coating are as shown in FIG. 10, the solid line in FIG. 10 is the edge of the first functional layer 30, and the dashed line in FIG. 10 is the edge of the second functional layer 40. In some embodiments, the first coating roller 11 and the second coating roller 12 may reciprocate on both the first side and the second side of the initial position, and at this time, the first functional layer 30 and the second functional layer 40 formed by coating are as shown in FIG. 11, the solid line in FIG. 11 is the edge of the first functional layer 30, and the dashed line in FIG. 11 is the edge of the second functional layer 40.

It should be noted that, in the thickness direction of the base material 20, the thick edge of the first functional layer 30 and the thick edge of the second functional layer 40 may also be completely overlapped in projection, and although the thick edge of the first functional layer 30 and the thick edge of the second functional layer 40 are always overlapped at this time, since both the first coating roller 11 and the second coating roller 12 reciprocate in the axial direction, the position of the thick edge of the first functional layer 30 on the base material 20 changes, and the position of the thick edge of the second functional layer 40 on the base material 20 also changes in the thickness direction of the base material 20. Therefore, as the base material 20 is wound, the positions of the thick edges of the first functional layer 30 between the plurality of turns of the base material 20 may be at least partially staggered, and may not be all overlapped on the same radial section, which can utilize the thickness difference between different portions of the base material 20 after the first functional layer 30 and the second functional layer 40 are coated, and can also effectively solve the problem of obvious bulging existing after coating and winding of the base material 20 are completed.

That is, as long as at least the first coating roller 11 reciprocates in the axial direction thereof, it can have the technical effect of effectively improving the situation of thick edge thickness superposition on the same radial section after the base material 20 is wound, and then can effectively solve the problem of obvious bulging after coating and winding of the base material 20 are completed.

According to some embodiments of the present application, the first coating roller 11 is a gravure roll or a microgravure roll; and the second coating roller 12 is a gravure roll or a microgravure roll.

In the technical solution of the embodiment of the present application, the coating structure is a cell region etched on a roller surface of the gravure roll or the microgravure roll, and the cell region is generally a plurality of meshes or grooves with a uniform depth for accommodating the coating slurry to be coated, and the coating slurry can be adhered in a cell. The prepared paste-like viscous slurry is uniformly coated on a specific region of the base material 20 through the cell region, and during coating, the thickness of each coating position needs to be consistent, and the coating thickness needs to be controlled within the tolerance range required by the process.

The difference between the gravure roll and the microgravure roll lies in that, on the one hand, when in use, the gravure roll needs to press the base material 20 onto the gravure roll through the back pressure roll to realize the contact between the cell region and the surface of the base material 20, while the microgravure roll does not need the back pressure roll, and the microgravure coating method is a reverse and contact coating method, that is, the rotation direction of the microgravure roll is opposite to the feeding direction of the base material 20, and the base material 20 does not need to be directly pressed against the microgravure roll through the back pressure roll. On the other hand, in general, the roll diameter of the microgravure roll is smaller, or the size of the cell on the microgravure roll is smaller, and the difficulty of processing and molding is greater than that of the gravure roll.

For example, the gravure roll is commonly a metal roll, the cell region of the gravure roll is also made of metal, and the mesh/groove size of the gravure roll is larger. After a ceramic material is sprayed on the roll surface of the microgravure roll, laser etching is adopted to form meshes; the cell size of the meshes is relatively small.

In the coating process, in order to reduce the possibility of the anilox roll interfering with other areas to cause the base material 20 to generate concave-convex points, a stepped anilox roll, such as a microgravure roll, is generally selected. The microgravure roll generally includes a roll shaft and a protrusion disposed in a circumferential direction of the roll shaft and protruding from a curved surface of the roll shaft. A cell for bonding the slurry is disposed on the circumferential surface of the protrusion.

The first coating roller 11 and the second coating roller 12 may have only one coating region, or may have two or more coating regions spaced apart in the axial direction, so as to improve the production efficiency of the production line, a plurality of functional layers may be obtained by one coating operation, and the uncoated region may reserve an operation space for subsequent processing procedures (for example, coating the uncoated region with a required functional layer, or cutting the base material 20).

To achieve coating, other unmentioned structures of the coating device 10 can refer to the related art. For example, the coating device 10 may further include a first liquid storage groove, the first coating roller 11 is rotatable relative to the first liquid storage groove and is partially located in the first liquid storage groove, the surface of the base material 20 is tangent to the surface of the first coating roller 11, and the first functional layer 30 is picked up and coated by rotating the first coating roller 11. In this way, with the rotation of the first coating roller 11, the first coating roller 11 can pick up the slurry of the first functional layer 30 in the first liquid storage groove and print and coat the slurry of the first functional layer to the first coating area. For another example, the coating device 10 may further include a second liquid storage groove corresponding to the second coating roller 12; for another example, the coating device 10 may further include an unwinding assembly, a winding assembly, a drying assembly 15 for drying the functional layer, and the like. Details are not described herein again.

In some embodiments, the drying assembly 15 may be disposed between the first coating roller 11 and the second coating roller 12, and the process may be as follows: the first functional layer 30 enters the drying assembly 15 after coating is completed, the drying assembly 15 dries the first functional layer 30, the base material 20 is then transported to the second coating roller 12 to coat the second functional layer 40, the base material 20 coated with the second functional layer 40 enters the drying assembly 15 again, and the drying assembly 15 dries the second functional layer 40.

In some embodiments, the drying assembly 15 may be arranged at the downstream of the first coating roller 11 and the second coating roller 12, and the process may be as follows: the base material 20 travels to the first coating roller 11 to be coated with the first functional layer 30, then the base material 20 travels to the second coating roller 12 to be coated with the second functional layer 40, then the base material 20 coated with the first functional layer 30 and the second functional layer 40 enters the drying assembly 15, and the drying assembly 15 simultaneously dries the first functional layer 30 and the second functional layer 40.

It should be noted that the first coating roller 11 and the second coating roller 12 are a set of coating assemblies, and it is necessary to satisfy that at least the first coating roller 11 can perform a reciprocating movement in the axial direction by the first driving member 13 while coating. When there is a need to coat other functional layers, one or more groups of coating assemblies can be further disposed as long as at least one coating roller in each group of coating assemblies can be the same as the first coating roller 11, and can rotate around the axis and reciprocate in the axial direction when coating the functional layer.

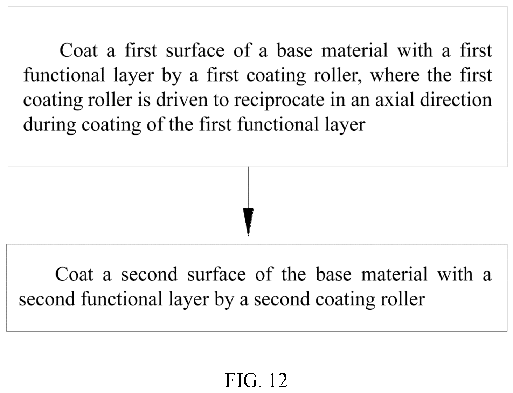

According to some embodiments of the present application, the present application further provides a coating method, and FIG. 12 shows a flow block diagram when the first coating roller 11 is arranged at the upstream of the second coating roller 12 in some embodiments.

A coating method provided by the present application includes the following steps:
a first surface of a base material 20 is coated with a first functional layer 30 by a first coating roller 11; and a second surface of the base material 20 is coated with a second functional layer 40 by a second coating roller 12;
where the first coating roller 11 is driven to reciprocate in an axial direction during coating of the first functional layer 30.

In the above technical solution, consistent with the technical effect of the coating device 10 described above, when the first coating roller 11 and the second coating roller 12 rotate around axial directions thereof and contact the surface of the base material 20, the sizing agent bonded in the coating structures thereof can be coated onto the surface of the base material 20. The first surface of the base material 20 is coated with the first functional layer 30 by the first coating roller 11, the second surface of the base material 20 is coated with the second functional layer 40 by the second coating roller 12, and in the width direction of the base material 20, the coating ranges of the first coating roller 11 and the second coating roller 12 are both smaller than the width of the base material 20, that is, the first coating roller and the second coating roller are configured to coat the front surface and the back surface of a part of the base material 20 with materials having certain functions, thereby meeting the functional requirements required by the base material 20.

As shown in FIG. 5 and FIG. 6, by driving the first coating roller 11 to rotate around the axial direction to coat the first functional layer 30 and driving the first coating roller 11 to reciprocate in the axial direction, the edge of the coating structure of the first coating roller 11 and the edge of the coating structure of the second coating roller 12 may be staggered. After the coating is completed, in the thickness direction of the base material 20, since the edge of the first functional layer 30 and the edge of the second functional layer 40 are not completely overlapped in projection, the thickness superposition of the thick edge of the first functional layer 30 and the thick edge of the second functional layer 40 formed on the base material 20 can be effectively solved. In addition, in the width direction of the base material 20, since the relative position between the thick edge of the first functional layer 30 and the thick edge of the second functional layer 40 changes, the axial reciprocating movement of the first coating roller 11 may be periodic or non-periodic, but as the base material 20 is wound, the positions of the thick edges of the first functional layer 30 on the plurality of turns of the base material 20 may be at least partially staggered, and may not be all overlapped on the same radial section, thereby effectively solving the problem of obvious bulging after the coating and winding of the base material 20 are completed.

In a state where the second coating roller 12 rotates only around the axis, in the width direction of the base material 20, although the position of the thick edge of the second functional layer 40 formed on the base material 20 is always unchanged, the thick edge of the second functional layer is still overlapped on the same radial section after the base material 20 is wound, since the first coating roller 11 reciprocates in the axial direction during coating of the first functional layer 30, in the thickness direction of the base material 20, for the thick edge of the second functional layer 40, some parts of the first surface corresponding to some parts are not provided with the first functional layer 30, some parts are overlapped with the thick edge of the first functional layer 30, and some parts are overlapped with the non-thick edge part of the first functional layer 30, instead of the thick edge of the first functional layer 30 always overlapped with the thick edge of the second functional layer 40. Due to non-superposition of thickness and a multi-thickness superposition manner, after the base material 20 is wound, the difference in thickness of different parts of the base material 20 can be used, and finally thickness superposition of the thick edge on the same radial section can also be effectively improved, thereby effectively solving the problem of obvious bulging of the base material 20 after coating and winding.

In summary, the coating method can significantly improve the condition of local bulging of the base material 20 after the base material is coated and wound into a coil, and the flatness of the base material 20 can be significantly improved, especially when used in the production of electrode sheets of a battery 100, which is beneficial to improving the overall quality of the electrode sheets 123 of the electrode assembly, thereby improving the quality and performance of the battery 100.

According to some embodiments of the present application, the coating method further includes: the second coating roller 12 is driven to reciprocate in the axial direction during coating of the second functional layer 40.

In the above technical solution, the same as the action principle of "driving the first coating roller 11 to reciprocate in the axial direction during coating of the first functional layer 30", the second coating roller 12 rotates around the axis and also reciprocates in the axial direction, so that the position of the thick edge of the second functional layer 40 coated on the base material 20 by the second coating roller 12 on the base material 20 can also be changed, and as the base material 20 is wound, the positions of the thick edges of the first functional layer 30 on the plurality of turns of base material 20 can be staggered from each other, and will not be all overlapped on the same radial section, and similarly, the positions of the thick edges of the second functional layer 40 can also be staggered from each other, and will not be all overlapped on the same radial section, thereby effectively solving the problem of obvious bulging after the coating and winding of the base material 20 are completed.

According to some embodiments of the present application, a frequency of the first coating roller 11 reciprocating in the axial direction is controlled to be the same as a frequency of the second coating roller 12 reciprocating in the axial direction.

In the above technical solution, the first coating roller 11 reciprocates in the axial direction at a certain frequency, and the axial reciprocating movement of the first coating roller 11 is periodic reciprocating movement, which is not disordered. Similarly, the second coating roller 12 also reciprocates in the axial direction at a certain frequency, and the axial reciprocating movement of the second coating roller 12 is periodic reciprocating movement, which is not disordered.

By controlling the frequency of the axial reciprocating movement of the first coating roller 11 to be the same as the frequency of the axial reciprocating movement of the second coating roller 12, the period of the axial reciprocating movement of the first coating roller 11 is kept consistent with the period of the axial reciprocating movement of the second coating roller 12, which can facilitate the takt control of the process.

According to some embodiments of the present application, driving the first coating roller 11 to reciprocate in the axial direction during coating of the first functional layer 30 specifically includes:
the first coating roller 11 is driven to reciprocate in the axial direction on a first side of an initial position thereof.

In the above technical solution, the axial reciprocating movement of the first coating roller 11 is only reciprocation between the initial position and the preset limit position on the first side, that is, at this time, the period of the axial reciprocating movement of the first coating roller 11 is a time interval between two successive movements of the first coating roller 11 from the initial position to the preset limit position on the first side after the first coating roller starts to move.

When the first functional layer 30 is coated, the first coating roller 11 is driven to reciprocate on the first side of the initial position of the first coating roller in the axial direction, so that the position of the edge of the first functional layer 30 on the base material 20 is changed, the edge of the coating structure of the first coating roller 11 and the edge of the coating structure of the second coating roller 12 may be partially staggered, and after coating is completed, along the thickness direction of the base material 20, since the edge of the first functional layer 30 and the edge of the second functional layer 40 are not completely overlapped in projection, the thickness superposition when the thick edge of the first functional layer 30 and the thick edge of the second functional layer 40 are formed on the base material 20 can be effectively solved. Meanwhile, as the base material 20 is wound, the positions of the thick edges of the first functional layers 30 on the plurality of turns of the base material 20 may be at least partially staggered, and will be not all overlapped on the same radial section, thereby effectively solving the problem of obvious bulging existing after coating and winding of the base material 20 are completed.

According to some embodiments of the present application, driving the second coating roller 12 to reciprocate in the axial direction during coating of the second functional layer 40 specifically includes:
the second coating roller 12 is driven to reciprocate in the axial direction on a second side of an initial position thereof, where the first side is opposite to the second side.

In the above technical solution, the axial reciprocating movement of the second coating roller 12 is only reciprocation between the initial position and the preset limit position on the second side, that is, at this time, the period of the axial reciprocating movement of the second coating roller 12 is a time interval between two successive movements of the second coating roller from the initial position to the preset limit position on the first side after the second coating roller 12 starts to move.

By deviating and reciprocating the first coating roller 11 only to the first side and deviating and reciprocating the second coating roller 12 only to the second side, the position of the edge of the first functional layer 30 on the base material 20 is changed, and the position of the edge of the second functional layer 40 on the base material 20 is also changed, and at the same time, since the frequency of the axial reciprocating movement of the first coating roller 11 is the same as the frequency of the axial reciprocating movement of the second coating roller 12, the first coating roller 11 and the second coating roller 12 always keep a consistent pace with opposite moving directions, and the edge of the coating structure of the first coating roller 11 and the edge of the coating structure of the second coating roller 12 can be partially staggered, thereby effectively solving the problem of the coil bulging after winding.

According to some embodiments of the present application, driving the first coating roller 11 to reciprocate in the axial direction during coating of the first functional layer 30 specifically includes:

The first coating roller 11 is driven to reciprocate once on a first side of an initial position thereof and then reciprocate once on a second side of the initial position thereof in the axial direction, and the movement is repeated.

In the above technical solution, the path of the axial reciprocating movement of the first coating roller 11 in one period is as follows: Initial position-limit position of first side-initial position-limit position of second side-initial position. The first coating roller 11 repeatedly reciprocates according to the above path, which is a double-sided reciprocating coating mode.

At this time, it can be known from analysis that when the second coating roller 12 is always located at the initial position thereof to coat the second functional layer 40, the first coating roller 11 adopts a double-sided reciprocating movement, and in the thickness direction of the base material 20, for the thick edge of the second functional layer 40, the region of the first surface corresponding to some parts is not provided with the first functional layer 30, and at this time, there is no thickness superposition, some parts are superposed with the thick edge of the first functional layer 30, and some parts are superposed with the non-thick edge part of the first functional layer 30, instead of the thick edge of the first functional layer 30 always being superposed with the thick edge of the second functional layer 40 in thickness. Since the first functional layer 30 and the second functional layer 40 have the possibility of non-superposition of thicknesses and superposition of various thicknesses, after the base material 20 is wound, the difference in thickness of different portions of the base material 20 can be used to effectively improve thickness superposition of the thick edge on the same radial section, thereby effectively solving the problem of obvious bulging after the coating and winding of the base material 20 are completed.

According to some embodiments of the present application, driving the second coating roller 12 to reciprocate in the axial direction during coating of the second functional layer 40 specifically includes:
the second coating roller 12 is driven to reciprocate once on a second side of an initial position thereof and then reciprocate once on the first side of the initial position thereof in the axial direction, and the movement is repeated.

In the above technical solution, in a manner similar to the axial reciprocating movement of the first coating roller 11, the path of the axial reciprocating movement of the second coating roller 12 in one period is as follows: Initial position-limit position of second side-initial position-limit position of first side-initial position. The second coating roller 12 repeatedly reciprocates according to the above path, which is a double-sided reciprocating coating mode.

The positions of the edge of the first functional layer 30 and the edge of the second functional layer 40 on the base material 20 are both changed, and at the same time, since the frequency of the reciprocating movement of the first coating roller 11 in the axial direction is the same as the frequency of the reciprocating movement of the second coating roller 12 in the axial direction, the first coating roller 11 and the second coating roller 12 always keep a consistent pace with opposite moving directions, and the edge of the coating structure of the first coating roller 11 and the edge of the coating structure of the second coating roller 12 can be partially staggered, thereby effectively solving the problem of bulging of the coiled material after winding.

At this time, it can be known from analysis that, along the thickness direction of the base material 20, for the thick edge of the second functional layer 40, the region of the first surface corresponding to some parts is not provided with the first functional layer 30, and at this time, there is no thickness superposition, some parts are superposed with the thick edge of the first functional layer 30, and some parts are superposed with the non-thick edge part of the first functional layer 30, instead of the thick edge of the first functional layer 30 always being superposed with the thick edge of the second functional layer 40 in thickness. Since the first functional layer 30 and the second functional layer 40 have the possibility of non-superposition of thicknesses and superposition of various thicknesses, after the base material 20 is wound, the difference in thickness of different portions of the base material 20 can be used to effectively improve thickness superposition of the thick edge on the same radial section, thereby effectively solving the problem of obvious bulging after the coating and winding of the base material 20 are completed.

According to some embodiments of the present application, the coating method further includes: a web travel time of the base material 20 between the first coating roller 11 and the second coating roller 12 is controlled to be t; and
according to the web travel direction of the base material 20, the first coating roller 11 and the second coating roller 12 are controlled to reciprocate in the axial direction successively, and a time difference between the successive reciprocating movements in the axial direction is controlled to be t.

In the above technical solution, it may be understood that with reference to the same region of the base material 20, the region is in contact with the first coating roller 11, and the first coating roller 11 starts to reciprocate along the axis as a timing start point, and after a time t, the region starts to be in contact with the second coating roller 12, and the second coating roller 12 starts to reciprocate along the axis while being in contact with the region.

When the web travel speed of the base material 20 is always constant, the web travel time of the base material 20 between the first coating roller 11 and the second coating roller 12 is t, and the length of the material of the base material 20 traveling from the first coating roller 11 to the second coating roller 12 can be obtained. By setting the time interval between the axial reciprocating movement of the first coating roller 11 and the axial reciprocating movement of the second coating roller 12 to be t, the portion of the base material 20 that the first coating roller 11 contacts when starting to move laterally is consistent with the portion of the base material 20 that the second coating roller 12 contacts when starting to move laterally, so that the coating start point of the first coating roller 11 reciprocating back and forth in the axial direction is consistent with the coating start point of the second coating roller 12 reciprocating back and forth in the axial direction.

It should be noted that the sequence of the first coating roller 11 and the second coating roller 12 is determined by the specific situation of the arrangement on the production line, and among the first coating roller 11 and the second coating roller 12, the one located upstream first reciprocates in the axial direction, and the one located downstream then reciprocates along the axis.

According to some embodiments of the present application, a maximum offset distance of the first coating roller 11 relative to the initial position thereof in the axial direction is controlled to be L, and L≤5 mm.

In the above technical solution, theoretically, the preset coating region of the first surface corresponds to the range coated by the first coating roller 11 at the initial position, and similarly, the preset coating region of the second surface corresponds to the range coated by the second coating roller 12 at the initial position. The coating region of the first coating roller 11 which deviates from the initial position in the axial direction is therefore not a preplanned coating region. By controlling the maximum offset distance of the first coating roller 11 relative to the initial position thereof in the axial direction to be no more than 5 mm, the problem of obvious bulging of the base material 20 after coating and winding can be effectively solved by improving the process, and the deviation of the coating range can be reduced, which can reduce the influence on the subsequent process and the final required performance of the base material 20.

It should be noted that the maximum offset distance L of the first coating roller 11 relative to the initial position thereof in the axial direction refers to the maximum offset distance on one side relative to the initial position thereof. In some embodiments, when the first coating roller 11 adopts a double-sided reciprocating movement solution, the maximum offset distance of the first coating roller on the first side and the second side should not exceed 5 mm.

For example, in some embodiments, L may be selected from 0.2 mm, 0.4 mm, 0.6 mm, 0.8 mm, 1.2 mm, 1.5 mm, 1.6 mm, 2 mm, 2.3 mm, 2.5 mm, 2.8 mm, 3 mm, 3.5 mm, 3.8 mm, 4 mm, 4.3 mm, 4.5 mm, 4.8 mm, 5 mm, and the like.

According to some embodiments of the present application, L≤0.5 mm.

In the above technical solution, by making the maximum offset distance L of the first coating roller 11 relative to the initial position thereof in the axial direction not more than 0.5 mm, the technical effect of effectively solving the obvious bulging after coating and winding of the base material 20 can be achieved, and the influence on the preset region where the first functional layer 30 and the second functional layer 40 do not need to be coated can be reduced, especially in some embodiments, the functional layers of other properties may also be coated in the regions adjacent to the first functional layer 30 and the second functional layer 40.

For example, in some embodiments, L may be selected from 0.08 mm, 0.1 mm, 0.15 mm, 0.2 mm, 0.24 mm, 0.26 mm, 0.3 mm, 0.32 mm, 0.36 mm, 0.38 mm, 0.4 mm, 0.42 mm, 0.44 mm, 0.45 mm, 0.46 mm, 0.49 mm, 0.5 mm, and the like.

According to some embodiments of the present application, driving the first coating roller 11 to reciprocate in the axial direction during coating of the first functional layer 30 specifically includes:
the axial movement of the first coating roller 11 is controlled to pause at least once during the process of the first coating roller 11 moving from the initial position to the limit position farthest away from the initial position;
And/or, the axial movement of the first coating roller 11 is controlled to pause at least once during the process of the first coating roller 11 moving from the limit position farthest from the initial position to the initial position.

In the above technical solution, in the process of the reciprocating movement of the first coating roller 11, in the process of the first coating roller 11 moving from the initial position to the limit position farthest away from the initial position, and/or in the process of the first coating roller 11 moving from the limit position farthest away from the initial position to the initial position, the axial movement of the first coating roller 11 is controlled to pause at least once. That is, in the two processes of the first coating roller 11 being deviated from the initial position and returned to the initial position, the axial traverse of at least one of the first coating roller and the second coating roller is not a continuous movement but an intermittent movement. During the pause of the movement of the first coating roller 11, the base material 20 is still conveyed at a preset speed.

By reasonably setting the relationship among the parameters such as the distance of a single movement of the first coating roller 11, the web travel length of the base material 20 corresponding to the single movement, the time of a single pause, and the web travel length of the base material 20 corresponding to the single pause, the thick edge of the first functional layer 30 and the thick edge of the second functional layer 40 on each turn of the base material 20 after winding can be effectively staggered, so that the thick edges of the first functional layer and the second functional layer are not only superposed in thickness on the corresponding radial section, thereby effectively solving the problem of obvious bulging after the coating and winding of the base material 20 are completed.

On this basis, according to some embodiments of the present application, in order to control the rhythm of the first coating roller 11 and the rhythm of the second coating roller 12 to be consistent, the axial movement of the first coating roller 11 and the axial movement of the second coating roller 12 are both controlled to be a paused movement, that is, each of the axial movement of the first coating roller and the axial movement of the second coating roller is paused at least once during the one way movement, and the number of pauses and the distance of a single movement of the first coating roller 11 and the second coating roller 12 are kept consistent.

According to some embodiments of the present application, driving the first coating roller 11 to reciprocate in the axial direction when coating the first functional layer 30 may also be as follows: in the process of the first coating roller 11 moving from the initial position to the limit position farthest from the initial position, the first driving member 13 drives the first coating roller 11 to continuously move in the axial direction, that is, in a manner of not stopping in the middle. The one way movement of the second coating roller 12 is the same as that of the first coating roller 11, and is a movement direction without stopping in the middle.

According to some embodiments of the present application, the present application further provides a production line of a battery 100, including the above-mentioned coating device 10, and the coating device 10 is configured to coat a base material 20 of an electrode sheet of the battery 100 with a functional layer.

The coating process of the present application will be described below with two specific examples by taking the case that both the first coating roller 11 and the second coating roller 12 are microgravure rolls, the first coating roller 11 is located at the upstream of the second coating roller 12, and the base material 20 to be coated is an aluminum foil as an example. The width of the single coating region on the microgravure roll is 10 mm, the total width of the aluminum foil is 1 m. The parameter settings of the first coating roller 11 and the second coating roller 12 are kept consistent, and the parameters are defined as follows:
Lx: a distance of a single movement of the microgravure roll moving in the axial direction;
La: a web travel length of the base material 20 corresponding to a single movement of the microgravure roll;
3) Ld: After the microgravure roll completes the single movement, after the base material 20 travels by the length Ld, the next single movement is started, that is, the web travel length of the base material 20 corresponding to the pause time of the two adjacent single movements of the microgravure roll;
4) L: a maximum offset distance of the microgravure roll in the axial direction from a base point of the initial position of the microgravure roll;
5) Lp: the length of the base material 20 required for the base material 20 to travel from the first coating roller 11 to the second coating roller 12;
Parameter setting requirements: Lx≤L; Ld≥0.

### Example 1 Only the first coating roller 11 reciprocates in the axial direction:

1) At the beginning of coating, the coating region of the first coating roller 11 at the initial position is aligned with the coating region of the second coating roller 12, and the first coating roller 11 starts to move for the first time from the initial position along the first axial side, the moving distance is Lx, Lx≤1 mm, for example, Lx is 0.2 mm, and during this movement, the transport length of the base material 20 is La, 0.1 m≤La≤1000 m.
2) After the first movement is completed, the first coating roller 11 stops moving, and the base material 20 travels by Ld during the stop of the first coating roller 11, where Ld≤200 m, for example, Ld is 20m.
3) The first coating roller 11 moves for the second time along the first axial side, similarly, when the second movement of the first coating roller 11 is completed, the web travel length of the base material 20 is still La, and after the second movement of the first coating roller 11 is completed, the first coating roller 11 stops moving again, and the base material 20 travels again by Ld, the first coating roller 11 moves for the third time, and so on; until the offset distance of the first coating roller 11 moving toward the first side reaches the maximum offset distance L, the first coating roller 11 starts to move in the reverse direction to return to the initial position, where L≤5 mm, for example, 0.5 mm.
4) The first coating roller 11 repeats the reciprocating movement on the first side of the initial position or periodically reciprocates on the first side and the second side of the initial position in the aforementioned manner until the coating is completed.

### Example 2 Both the first coating roller 11 and the second coating roller 12 reciprocate in the axial direction:

1) At the beginning of coating, the coating region of the first coating roller 11 at the initial position is aligned with the coating region of the second coating roller 12 at the initial position, the first coating roller 11 only reciprocates on a first side, such as the left side, of the initial position, and the second coating roller 12 moves in an opposite region to the first coating roller 11, that is, the second coating roller 12 only reciprocates on a second side, i.e., the right side, of the initial position;
2) The first coating roller 11 starts to move from the initial position to the left side by a moving distance Lx, Lx≤1 mm, for example, Lx may be selected as 0.2 mm, and during this movement, the running length of the base material 20 is La, 0.1 m ≤La≤1000 m, for example, 20 m. By taking the first start of movement of the first coating roller 11 as a base point, the web travel length of the base material 20 is equal to Lp, the second coating roller 12 starts to move by a moving distance Lx in the direction opposite to the first coating roller 11, that is, the start point of the first coating roller 11 for coating coincides with the start point of the second coating roller 12 for coating;
3) after the first movement of the first coating roller 11 is completed, the first coating roller 11 stops moving, and the base material 20 travels by Ld during the stop of the first coating roller 11, where Ld≤200 m, for example, Ld is 20 m; similarly, after the first movement of the second coating roller 12 is completed, the second coating roller 12 stops moving, and the base material 20 travels by Ld during the stop of the movement of the second coating roller 12, where Ld≤0-200 m, for example, Ld is 20 m;
4) The first coating roller 11 and the second coating roller 12 start to move for the second time respectively, and during the second movement, the web travel length of the base material 20 is L; after the second movement is completed, the first coating roller 11 and the second coating roller 12 stop the transverse movement respectively, and after the base material 20 travels by Ld, the first coating roller 11 and the second coating roller 12 perform a third movement, and so on; and
5) The first coating roller 11 and the second coating roller 12 move in opposite directions until the first coating roller and the second coating roller move to the maximum offset position or return to the initial position.

The coating device 10, the coating method and the production line of the battery 100 according to the embodiments of the present application can effectively solve the technical problem that the coil is obviously bulged after the base material 20 is coated and wound, and when used in the production of the battery 100, the quality of the electrode assembly 123 of the battery 100 can be effectively improved, thereby improving the quality and performance of the battery 100.

Although the present application has been described with reference to some preferred embodiments, various modifications to the present application and replacements of the components therein with equivalents can be made without departing from the scope of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A coating device,configured to coat a base material with functional layers, wherein in the thickness direction of the base material, the base material comprises a first surface and a second surface which are opposite to each other; and the coating device comprises:
a first coating roller, configured to coat the first surface with a first functional layer;
a second coating roller, arranged at the downstream or upstream of the first coating roller in a web travel direction of the base material, and configured to coat the second surface with a second functional layer; and
a first driving member connected to the first coating roller and configured to drive the first coating roller to reciprocate in an axial direction.

2. The coating device according to claim 1, further comprising:
a second driving member connected to the second coating roller and configured to drive the second coating roller to reciprocate in the axial direction.

3. The coating device according to claim 1 or 2, wherein the first coating roller is a gravure roll or a microgravure roll; and the second coating roller is a gravure roll or a microgravure roll.

4. A coating method, comprising the following steps:
coating a first surface of a base material with a first functional layer by a first coating roller; and coating a second surface of the base material with a second functional layer by a second coating roller;
wherein the first coating roller is driven to reciprocate in an axial direction during coating of the first functional layer.

5. The coating method according to claim 4, further comprising:
driving the second coating roller to reciprocate in the axial direction during coating of the second functional layer.

6. The coating method according to claim 5, wherein a frequency of the first coating roller reciprocating in the axial direction is controlled to be the same as a frequency of the second coating roller reciprocating in the axial direction.

7. The coating method according to claim 6, wherein driving the first coating roller to reciprocate in the axial direction during coating of the first functional layer specifically comprises:
driving the first coating roller to reciprocate in the axial direction on a first side of an initial position thereof.

8. The coating method according to claim 7, wherein the driving the second coating roller to reciprocate in the axial direction during coating of the second functional layer specifically comprises:
driving the second coating roller to reciprocate in the axial direction on a second side of an initial position thereof, wherein the first side is opposite to the second side.

9. The coating method according to claim 6, wherein driving the first coating roller to reciprocate in the axial direction during coating of the first functional layer specifically comprises:
driving the first coating roller to reciprocate once on a first side of an initial position thereof and then reciprocate once on a second side of the initial position thereof in the axial direction, and repeating the movement, wherein the first side is opposite to the second side.

10. The coating method according to claim 9, wherein the driving the second coating roller to reciprocate in the axial direction during coating of the second functional layer specifically comprises:
driving the second coating roller to reciprocate once on a second side of an initial position thereof and then reciprocate once on a first side of the initial position thereof in the axial direction, and repeating the movement.

11. The coating method according to any one of claims 5 to 10, further comprising:
controlling a web travel time of the base material between the first coating roller and the second coating roller to be t; and
according to the web travel direction of the base material, controlling the first coating roller and the second coating roller to reciprocate in the axial direction successively, and controlling a time difference between the successive reciprocating movements in the axial direction to be t.

12. The coating method according to any one of claims 4 to 11, wherein a maximum offset distance of the first coating roller relative to the initial position thereof in the axial direction is controlled to be L, and L≤5 mm.

13. The coating method according to claim 12, wherein L≤0.5 mm.

14. The coating method according to any one of claims 4 to 13, wherein driving the first coating roller to reciprocate in the axial direction during coating of the first functional layer specifically comprises:
controlling the axial movement of the first coating roller to pause at least once during the process of the first coating roller moving from the initial position to the limit position farthest away from the initial position;
and/or, controlling the axial movement of the first coating roller to pause at least once during the process of the first coating roller moving from the limit position farthest from the initial position to the initial position.

15. A battery production line, comprising the coating device according to any one of claims 1 to 3, wherein the coating device is configured to coat a base material of an electrode sheet of a battery with functional layers.
